(19) Europäisches Patentamt
European Patent Office
Office européen des brevets

(11) **EP 1 898 063 B1**

(12) **EUROPEAN PATENT SPECIFICATION**

(45) Date of publication and mention
of the grant of the patent:
**21.07.2010 Bulletin 2010/29**

(51) Int Cl.:
**F01N 11/00** *(2006.01)* **G01M 15/04** *(2006.01)*

(21) Application number: **06120415.2**

(22) Date of filing: **11.09.2006**

(54) **Method and device for estimation of variables, in particular during operation of a motor vehicle**

Verfahren und Vorrichtung zur Bestimmung von Variablen, insbesondere während des Betriebs eines Kraftfahrzeugs

Procédé et dispositif d'estimation de variables, en particulier pendant le fonctionnement d'un véhicule à moteur

(84) Designated Contracting States:
**DE FR GB**

(43) Date of publication of application:
**12.03.2008 Bulletin 2008/11**

(73) Proprietor: **Ford Global Technologies, LLC Dearborn, MI 48126 (US)**

(72) Inventors:
• **Carberry, Brendan**
  **52074, Aachen (DE)**
• **Schneider, Matthew**
  **52064, Aachen (DE)**
• **Balenovic, Mario**
  **Eindhoven 5645 KT (NL)**

(74) Representative: **Drömer, Hans-Carsten Henry-Ford Str. 1 50725 Köln (DE)**

(56) References cited:
US-A- 6 050 087     US-A1- 2005 267 669
US-B1- 6 199 057     US-B1- 6 622 548

**Description**

The present invention relates to a method and device for estimation of variables, in particular during operation of a motor vehicle. The invention can be advantageously used particularly in the field of motor vehicles to estimate certain variables, in particular non-measurable variables or variables for which a direct measuring shall be avoided in order to limit the number of applied sensors, based upon other measured signals, wherein the variables to be estimated and the measured signals are related to each other via a dynamic process in the vehicle.

The increasing requirements in automotive diagnostic or control systems without significant increase of applied sensors have led to implementation of model-based techniques. In situations where direct measurements of one or more variables required in the operation of a diagnostic or control system are not possible, it is known to apply estimation techniques or "indirect" measurements, i.e. the estimation of the variables of interest based upon measurement of other variables. Examples are the estimation of CO/HC emissions based upon a measurement of the catalyst temperature, or the estimation of the injected amount of fuel based upon the exhaust air/fuel ratio.

However, a problem arising in such kind of estimations is that the results of indirect measurements are manipulated by dynamic processes occurring in the motor vehicle, causing the results of the estimation to be deficient and imprecise and impeding a reliable functionality of the respective diagnostic or control system. Such dynamic processes are including e.g. time-dependent drifts of the measured variables, variations of the engine parameters (speed, load), the dynamic behaviour of the involved sensors and/or the dynamics of the system itself, e.g. in the above example wherein the catalyst temperature is used for determining the exhaust emissions the dynamics of the heat capacity of the exhaust system comprising pipes, catalyst etc.

It is therefore an object of the present invention to provide to a method and device for estimation of variables, in particular during operation of a motor vehicle, which enable a more reliable estimation in the presence of dynamic processes, which are occurring during e.g. the operation of the vehicle.

This object is achieved by the method according to the independent claim 1, as well as the device according to the independent claim 7.

Preferred embodiments can be gathered from the depending claims.

According to the present invention, a method is provided that serves for estimation of at least one variable related to the operating state of a dynamic system, in particular a motor vehicle, wherein said variable is a function of at least one input parameter and is correlated with a second measurable variable via a dynamic process proceeding in said system and wherein said first variable is estimated based upon measurement of said second variable. While for powertrain applications, a dependency of said variable on two parameters (i.e. engine speed and load) is typical, the invention is not limited thereto, so there can be a dependency of said variable also on only one or on more than two parameters - i.e. multi-dimensional parameter-dependence of said variable.

The method according to the present invention comprises the following steps:

- determining a measured value of said second variable;

- determining on the basis of an estimated value of said first variable a correlated calculated value of said second variable by using a process model that describes said correlation between said first variable and said second variable;

- submitting a plurality of membership degrees being attributed in a fuzzy like system to a value of said at least one input parameter responsible for said estimated value to a dynamical system that corresponds to said dynamic process, thereby obtaining a plurality of filtered membership degrees; and

- recursively estimate said first variable on the basis of the difference between said measured and said calculated values of said second variable and said filtered membership degrees.

The inventive method particularly comprises a step of updating an estimated value of said first variable on the basis of a difference between said measured value and a calculated value of said second variable, wherein said calculated value has been determined using a process model describing the correlation between said first variable and said second variable. Instead of directly using the difference between said measured value of said second variable and said calculated value of said second variable in order to perform an update of the estimated value of the first variable, the inventive method also considers that this difference between said measured and said calculated values of said second variable occurs, due to the dynamic process, with a time delay (or process delay) with respect to the presence of the first variable. With other words, the measured value of the second variable corresponds to an input of the first variable into the dynamic process which has occurred in the past with respect to the time when said measurement is done.

The invention can be practically applied to any dynamic process. In particularly, the invention can be advantageously used in the field of motor vehicles to estimate certain non-measurable variables (or variables for which a direct measuring shall be avoided) based upon other measured signals, wherein the variables to be estimated and the measured signals are related to each other via a dynamic process in the vehicle. An example is the estimation of CO/HC emissions based upon a measurement of the catalyst temperature.

The invention is described in more detail with reference to the following detailed description and based upon preferred embodiments shown in the drawings, in which:

Figure 1 shows a block diagram used to explain the general course of the method of the present invention;

Figure 2a-b are each showing three triangular membership functions used according to the present invention to mathematically describe Intermediate values of the input parameters $u_1$ and $u_2$;

Figure 3a-b show a time dependent variation of the input signals $u_1$ (Figure 3a) and $u_2$ (Figure 3b) used for an estimation in the described exemplarily embodiment of the method according to the present invention;

Figure 4 shows the obtained time dependent variation of the error signal $Y_{meas}$-$Y_{cal}$ between the measured value $Y_{meas}(t)$ and the calculated value $Y_{cal}(t)$ according to the estimation in the described exemplarily embodiment; and

Figure 5a-b show as a function of time the obtained results of the values $P_{11}$, $P_{12}$, $P_{13}$, $P_{14}$ and $P_{15}$ (Fig. 5a) or $P_{31}$, $P_{32}$, $P_{33}$, $P_{34}$ and $P_{35}$ (Figure 5b), respectively, according to the estimation in the described exemplarily embodiment.

In the following embodiment, the method according to the present invention is applied to the field of estimation of vehicle-related variables. The invention is, however, not limited to this field but may be advantageously realized for an estimation of variables in any, also non-automotive, dynamic system.

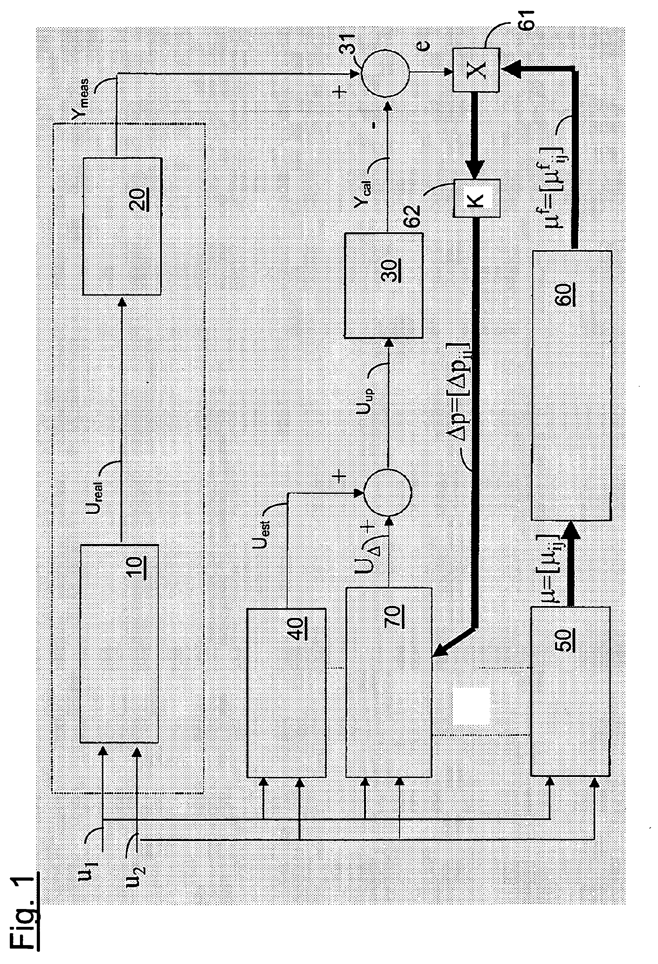

With reference of the block diagram shown in Fig. 1, it is assumed that an unknown scalar variable U, e.g. the rate of CO/HC emission of the vehicle, is a function of current operating conditions $u_1$ and $u_2$ (with $u_1$= motor speed and $u_2$= motor load) and shall be estimated on the basis of a direct measurement of a suitable measurable variable Y (e.g. catalyst temperature increase). The desired information is as a map including values $U_{real}$ of said scalar variable U as a function of said operating conditions $u_1$ and $u_2$. In the following, this (unknown) map is referenced to as "real map" and is represented in Fig. 1 by block 10.

Furthermore, it is assumed that the actual values of $u_1$ and $u_2$ are time dependent and that the values of the unknown scalar variable U for a certain pair of values of $u_1$ and $u_2$ and the measurable variable Y for a certain pair of values of $u_1$ and $u_2$ are correlated to each other by a dynamic (i.e. time dependently varying) process 20. It is further assumed that this dynamic process 20 is described by a known process model 30. This process model 30 is used for estimation of the real map 10 as follows:

Depending on the actual values of $u_1$ and $u_2$ (motor speed and motor load), the presence of an (unknown) value $U_{real}$ of said first variable (CO/HC emission) results in a certain measured value $Y_{meas}$ of the measurable second variable (catalyst temperature increase - exotherm). With other words, the dynamic process running in the dynamic system has the input $U_{real}$ and the output $Y_{meas}$, wherein $U_{real}$ is not known, while output $Y_{meas}$ can be measured. For an estimation of the real map 10, the method according to the present invention now considers, as explained in the following in more detail, a time delay that exists as a consequence of the respective dynamic process 20 running in the vehicle between the moment of presence of the value $U_{real}$ and the detection of the signal $Y_{meas}$.

The method of the present invention starts with an arbitrary initial map P= [$P_{ij}$] being represented in Fig. 1 by block 40, an example of which is given in the following Table 1. In this Table 1, for each pair of values of $u_1$ and $u_2$ corresponding start values are specified for the unknown variable U, with $P_{ij}$ being the value of the variable U in line i and column j of Table 1.

Table 1:

| $u_2 \rightarrow$ <br> $u_1 \downarrow$ | -1 | -0.5 | 0 | 0.5 | 1 |
|---|---|---|---|---|---|
| -1 | 1 | 1 | 1 | 1 | 1 |
| -0.5 | 1 | 1 | 1 | 1 | 1 |
| 0 | 1 | 1 | 1 | 1 | 1 |
| 0.5 | 1 | 1 | 1 | 1 | 1 |

(continued)

| $u_2 \rightarrow$<br>$u_1 \downarrow$ | -1 | -0.5 | 0 | 0.5 | 1 |
|---|---|---|---|---|---|
| **1** | 1 | 1 | 1 | 1 | 1 |

The process model 30 is now applied on each of said values in order to determine a corresponding calculated value $Y_{cal}(t)$ for the measurable variable Y. In the case of ideally estimated input $U_{est}(t)=U_{real}(t)$ and for a perfect process model 30, the calculated value $Y_{cal}$ should be identical with the measured value, i.e. $Y_{cal}(t)=Y_{meas}(t)$.

On the other hand, any difference between the assumed input map parameters and the actual (to be estimated) map will lead to a difference between $U_{est}$ and $U_{real}(t)$, which will then be observed as a difference between the calculated value $Y_{cal}(t)$ and the measured value $Y_{meas}(t)$. Furthermore, the measured value $Y_{meas}(t)$, as well as the calculated value $Y_{cal}(t)$ if the process dynamics is properly modelled, i.e. if block 30 approximately equals block 20, will occur with a time delay due to dynamics of the process.

The invention now considers that the obtained difference $Y_{meas}(t)-Y_{cal}(t)$ as such is not appropriate to be directly used for updating the map of estimated values $U_{est}$. At this point, the inventive method enables to capture information concerning the dynamics of the dynamic process and to use this information for a more reliable estimation of the unknown map of the variable U.

The map including the respective values of the scalar variable U as a function of operating conditions, i.e. the input parameters $u_1$ and $u_2$, is stored as a lookup table, which can be mathematically described as a fuzzy-like system. In the following, the values $P_{ij}$ of the scalar variable U entered in the lookup table are called "activity values".

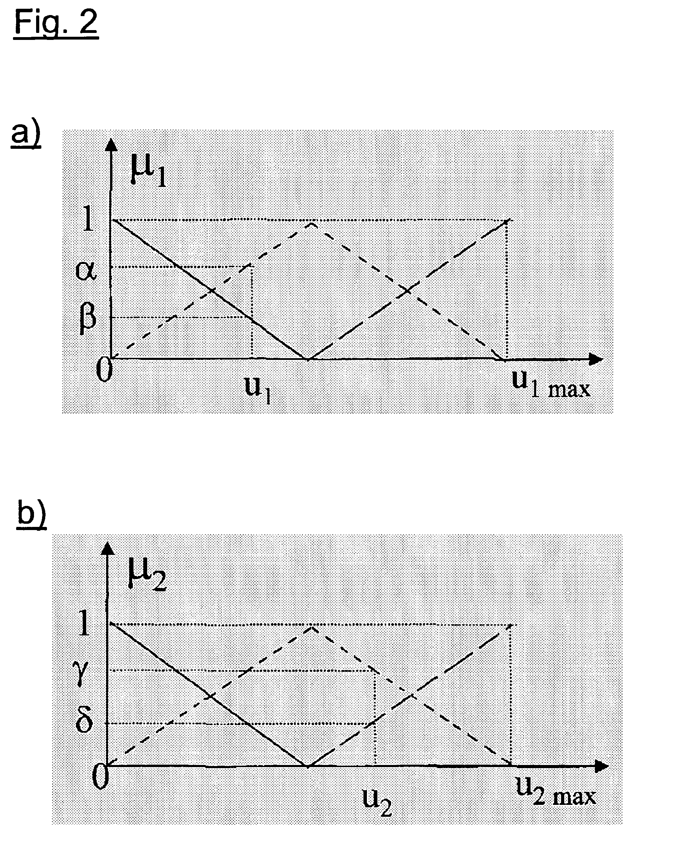

The existence of intermediate values of the input parameters $u_1$ and $u_2$ lying between the grid points of the lookup table (i.e. between the combinations of values of $u_1$ and $u_2$ for which the parameters in Table 1 are defined (such intermediate values may e.g. be $u_1=0.75$, $u_2=0.25$) is considered by defining a matrix $\mu=[\mu_{ij}]$ for each parameter pair $(u_1,u_2)$, with $\mu_{ij}$ representing the membership degrees to be attributed to the discrete values of the parameters $u_1$ and $u_2$ lying at the grid points of Table 1 (i.e. the values -1, -0.5, 0, 0.5, 1 in Table 1) so that the respective, specific parameter pair $(u_1,u_2)$ is obtained. As in a fuzzy system, the grid points (i.e. combinations of values of $u_1$ and $u_2$ for which the parameters in Table 1 are defined) can be regarded as the peaks of triangular membership functions as illustrated in Fig. 2. Intermediate values of the input parameters $u_1$ and $u_2$ will correspond to values of said triangular membership functions different from said peaks. Fig. 2a and Fig. 2b are each showing three triangular membership functions (being drawn with solid lines, short-dashed and long-dashed lines) which can be used to define the single components of vectors $\mu_1$ and $\mu_2$, such that with

$$\mu_1(u_1) = \begin{pmatrix} \beta \\ \alpha \\ 0 \end{pmatrix}, \quad \mu_2(u_2) = \begin{pmatrix} 0 \\ \gamma \\ \delta \end{pmatrix}, \tag{1}$$

the parameter pair $u_1$, $u_2$ can be mathematically described by the matrix

$$\mu = \mu(u_1,u_2) = \begin{pmatrix} 0 & \beta\gamma & \beta\delta \\ 0 & \alpha\gamma & \alpha\delta \\ 0 & 0 & 0 \end{pmatrix} \tag{2},$$

Accordingly, $\mu=[\mu_{ij}]$ is the matrix including all membership degrees $\mu_{ij}$. Any entry of the variable U in the lookup table for a parameter pair $u_1$, $u_2$ is calculated as

$$U = P^T * \mathrm{col}(\mu), \text{ with } \mu = \mu(u_1, u_2) \tag{3},$$

with P being defined as the parameter vector including all elements $P_{ij}$ (=activity values) of the map (i.e. the transformation of the map $[P_{ij}]$ into a column vector, $P^T$ being the corresponding transposed parameter vector, $\mu = [\mu_{ij}]$ being the matrix including all membership degrees $\mu_{ij}$ and $\mathrm{col}(\mu)$ being the transformation of the map $\mu = [\mu_{ij}]$ into a column vector, i.e.

$$P = [p_{11}, \ p_{12}, \ p_{13}, \ p_{21}, \ p_{22}, \ p_{23}, \ p_{31}, \ p_{32}, \ p_{33}]^T \tag{4},$$

and

$$\mathrm{col}(\mu) = [\mu_{11}, \ \mu_{12}, \ \mu_{13}, \ \mu_{21}, \ \mu_{22}, \ \mu_{23}, \ \mu_{31}, \ \mu_{32}, \ \mu_{33}]^T \tag{5}.$$

For the above example, the entry in the lookup table for a parameter pair $u_1$, $u_2$ is

$$U = P^T * \mathrm{col}(\mu) = p_{12}\beta\gamma + p_{13}\beta\delta + p_{22}\alpha\gamma + p_{23}\alpha\delta \tag{6}.$$

Going back to Fig. 1, the course of the method according to the present invention comprises, on the one hand, the calculation of corresponding values for U based upon the initial map 40 in line with eq. (6). The obtained result is submitted to the process model 30, the result of which is denoted as a calculated value $Y_{cal}(t)$. This output is now compared to the measured output $Y_{meas}$ (t), i.e. the result of the real dynamic process 20 by calculating the difference of the values $Y_{meas}$ and $Y_{cal}$ (symbolized by block 31 in Fig. 1). In case of a difference between the process model 30 and the real dynamic process 20, an error signal $Y_{meas} - Y_{cal} \neq 0$ is obtained.
Furthermore, the matrix $\mu = [\mu_{ij}]$ including the calculated membership degrees $\mu_{ij}$ and symbolized in Fig. 1 by block 50 is submitted to a process model 60 that corresponds to the process dynamics (input/output model with the gain scaled to 1, as further explained below).
The filtered membership degrees

$$\mu^f = [\mu^f_{ij}] \tag{7}$$

obtained in such a way are capturing the dynamic of the process, i.e. the process delay, since it becomes possible to determine which rule(s) in the input look up table is (are) responsible for current output error $Y_{meas} - Y_{cal}$.
It may be examplarily assumed that the process dynamics can be defined by a time dependency $G(s) = 1/(1+s)^4$, and the corresponding process model 30 describing the relationship between the measured (output) variable $Y_{meas}$ and the (input) variable $U_{real}$ to be estimated is known and correctly describing this dynamic process 20. The above term $G(s) = 1/(1+s)^4$ just examplarily represents a higher order dynamic system. The calculation of the filtered membership degrees $\mu^f = [\mu^f_{ij}]$ of equation (7) is performed in block 60, as mentioned above, using a I/O process model with unity gain $G(z^{-1})$. $G(z^{-1})$ is the Z-transformation (discretisation) of the process dynamics, in the example $G(z^{-1}) = Z\{1/(1+s)^4\}$. This is necessary since the algorithm has to be applied on a digital computer so all calculations have to be done in the discrete domain. If the process gain would not be equal to 1, for example $4/(1+s)^4$, $G(z^{-1})$ would still be $Z\{1/(1+s)^4\}$ for the calculation of the filtered membership degrees $\mu^f = [\mu^f_{ij}]$.
Then, updates of the activation values $P_{ij}$ are obtained in block 70 according to

$$\Delta P_{ij}(k) = \Delta P_{ij}(k-1) + \Delta p_{ij}(k). \tag{8}$$

The calculation according to eq. (8) is performed for all indices i and j, wherein the update value $\Delta p_{ij}(k)$ is obtained by multiplying the error signal $Y_{meas}(k)-Y_{cal}(k)$ with the corresponding filtered membership degree $\mu^f(k)= [\mu^f_{ij}]$ (symbolized in Fig. 1 by block 61) and a predefined gain K (symbolized in Fig. 1 by block 62), i.e.

$$\Delta p_{ij}(k) = (Y_{meas}(k)-Y_{cal}(k)) * K * \mu^f(k) . \qquad (9)$$

In equation (9), k denotes the current time step (sample). The predefined gain K represents a factor that tunes the speed of adaptation while simultaneously modifying the stability of the estimation process, i.e. the rate of changes or fluctuations obtained. Then, the above steps are repeated with an appropriate sampling rate in order to iteratively approximate said first variable U with increasing accuracy by repeatedly updating the actual estimated value $U_{est}$ of said first variable. The updated value of first variable U is given by:

$$U_{up}(k)=U_{est}(k)+U_\Delta(k)= P^T*col(\mu(k))+\Delta P(k)^T*col(\mu(k)) \qquad (10)$$

In the following, it is assumed that Table 2 as specified below includes, for each pair of values of $u_1$ and $u_2$, the correct values for the unknown scalar variable U so that the correct values $P_{ij}$ of the lookup table can be obtained:

Table 2:

| $u_2 \rightarrow$ $u_1\downarrow$ | -1 | -0.5 | 0 | 0.5 | 1 |
|---|---|---|---|---|---|
| -1 | 1 | 2 | 3 | 4 | 5 |
| -0.5 | 1 | 2 | 3 | 4 | 5 |
| 0 | 1 | 2 | 3 | 4 | 5 |
| 0.5 | 1 | 2 | 3 | 4 | 5 |
| 1 | 1 | 2 | 3 | 4 | 5 |

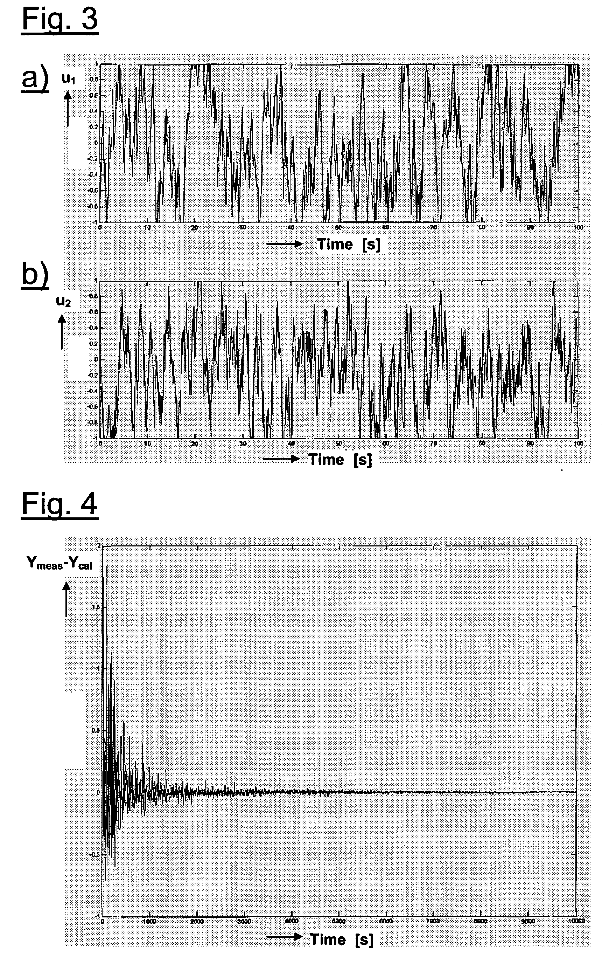

For the above example and for a time dependent variation of the input signals $u_1$ and $u_2$ as illustrated in Fig. 3a and Fig. 3b, the method for estimation of the unknown scalar variable U (i.e. the corresponding values $P_{ij}$ of the lookup table) has been performed with a sampling rate of 0.1 seconds (s) and with a gain K (see eq. (9)) of K=1.

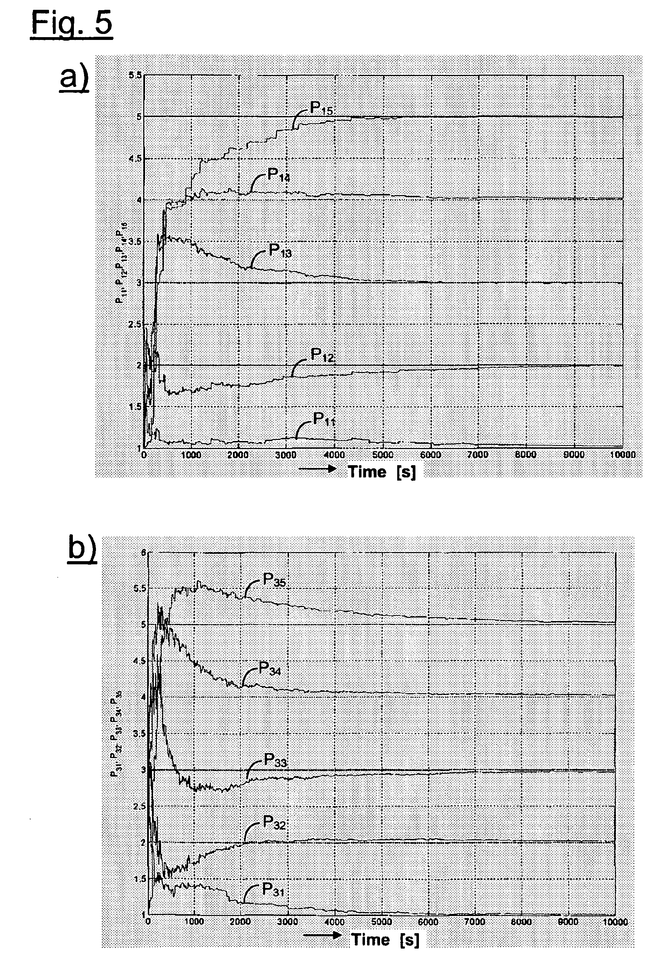

Fig. 4 shows the obtained time dependent variation of the error signal $Y_{meas}-Y_{cal}$, while Fig. 5a and Fig. 5b show, also as a function of time, the obtained results of the values $P_{11}$, $P_{12}$, $P_{13}$, $P_{14}$ and $P_{15}$ (Fig. 5a) or $P_{31}$, $P_{32}$, $P_{33}$, $P_{34}$ and $P_{35}$ (Fig. 5b), respectively. These results as shown in Fig. 4 and Fig. 5a,b are obtained by an on-line estimation, i.e. during the operation of the vehicle and the accompanying variation of the input parameters $u_1$ and $u_2$ as illustrated in Fig. 3a and Fig. 3b.

As can be seen in Fig. 4, the error signal $Y_{meas}-Y_{cal}$ approximates to zero, which means that with increasing time, the calculated value Y becomes almost identical with the measured value, i.e. $Y_{meas}-Y_{cal}$. Furthermore, as can be seen in Fig. 5a and Fig. 5b, the values for $P_{11}$, $P_{12}$, $P_{13}$, $P_{14}$ and $P_{15}$ (Fig. 5a) or $P_{31}$, $P_{32}$, $P_{33}$, $P_{34}$ and $P_{35}$, respectively, are approximating with time to the values specified in Table 2, i.e. the correct values $P_{ij}$ of the lookup table.

## Claims

1. A method for estimation of at least one variable being related to the operating state of a dynamic system, in particular a motor vehicle, wherein said variable (U) is a function of at least one input parameter ($u_1$, $u_2$) and is correlated with a second measurable variable (Y) via a dynamic process (20) proceeding in said system and wherein said first variable (U) is estimated based upon measurement of said second variable (Y),
**characterized in that**
said method comprises the following steps:

a) determining a measured value ($Y_{meas}$) of said second variable (Y);

b) determining on the basis of an estimated value ($U_{est}$) of said first variable (U) a correlated calculated value ($Y_{cal}$) of said second variable (Y) by using a process model (30) that describes said correlation between said first variable (U) and said second variable (Y);

c) submitting a plurality of membership degrees ($\mu_{ij}$) being attributed in a fuzzy like system to a value of said at least one input parameter ($u_1$, $u_2$) responsible for said estimated value ($U_{est}$) to a dynamical system (60) that corresponds to said dynamic process (20), thereby obtaining a plurality of filtered membership degrees ($\mu^f_{ij}$); and

d) recursively estimate said first variable (U) on the basis of the difference ($Y_{meas}$ $Y_{cal}$) between said measured and said calculated values of said second variable (Y) and said filtered membership degrees ($\mu^f_{ij}$).

2. The method according to claim 1,
   **characterized in that**
   said steps a) - d) are performed for a plurality of values of said at least one input parameter ($u_1$, $u_2$) in order to establish a map including values of said first variable (U) in dependence of values of said at least one input parameter ($u_1$, $u_2$).

3. The method according to claim 1 or 2,
   **characterized in that**
   said step d) comprises the step of recursively updating a plurality of activity values $P_{ij}$ entered in a look up table describing said first variable (U) as a function of the at least one input parameter ($u_1$, $u_2$) according to the relation

   $$\Delta P_{ij}(k) = \Delta P_{ij}(k-1) + \Delta p_{ij}(k),$$

   with

   $$\Delta p_{ij}(k) = (Y_{meas}(k) - Y_{cal}(k)) * K * \mu^f(k),$$

   wherein k denotes the current time step (sample), denotes a predefined gain and $\mu^f = [\mu^f_{ij}]$ is a matrix including said filtered membership degrees ($\mu^f_{ij}$).

4. The method according to anyone of the claims 1 to 3,
   **characterized in that**
   each updated value ($U_{up}$) of said first variable U is given by:

   $$U_{up}(k) = U_{est}(k) + U_\Delta(k) = P^T * col(\mu(k)) + \Delta P(k)^T * col(\mu(k)),$$

   wherein $U_{est}$ is an actual estimated value of said first variable (U), P denotes a parameter vector including said activity values $P_{ij}$, $P^T$ is the corresponding transposed parameter vector, $\mu = [\mu_{ij}]$ is a matrix including said membership degrees $\mu_{ij}$ and $col(\mu)$ is a transformation of the map $\mu = [\mu_{ij}]$ into a column vector.

5. The method according to anyone of the preceding claims,
   **characterized in that**
   said method is performed on-line during the operation of said dynamic system.

6. The method according to anyone of the preceding claims,
   **characterized in that**
   said first variable (U) is a variable related to an operating state of a motor vehicle and is selected from the group consisting of: CO emission rate, HC emission rate, injected amount of fuel; and/or
   said second variable (Y) is a variable related to an operating state of a motor vehicle and is selected from the group consisting of: catalyst temperature, exhaust air/fuel ratio; and/or
   said at least two input parameters ($u_1$, $u_2$) comprise the engine speed and the engine load of a motor vehicle.

**Patentansprüche**

1. Verfahren zur Schätzung mindestens einer Variablen, die den Betriebszustand eines dynamischen Systems, insbesondere eines Kraftfahrzeugs, betrifft, wobei die Variable (U) eine Funktion mindestens eines Eingangsparameters ($u_1$, $u_2$) ist und über einen in dem System ablaufenden dynamischen Prozess (20) mit einer zweiten messbaren Variablen (Y) korreliert ist, wobei die erste Variable (U) auf der Basis von Messung der zweiten Variablen (Y) geschätzt wird, **dadurch gekennzeichnet, dass**
   das Verfahren die folgenden Schritte umfasst:

   a) Bestimmen eines gemessenen Werts ($Y_{meas}$) der zweiten Variablen (Y);
   b) Bestimmen eines korrelierten berechneten Werts ($Y_{cal}$) der zweiten Variablen (Y) auf der Basis eines geschätzten Werts ($U_{est}$) der ersten Variablen (U) durch Verwendung eines Prozessmodells (30), das die Korrelation zwischen der ersten Variablen (U) und der zweiten Variablen (Y) beschreibt;
   c) Übergeben mehrerer Zugehörigkeitsgrade ($\mu_{ij}$), die in einem fuzzy-artigen System einem Wert des mindestens einen Eingangsparameters ($u_1$, $u_2$) zugeschrieben werden, der für den geschätzten Wert ($U_{est}$) verantwortlich ist, an ein dynamisches System (60), das dem dynamischen Prozess (20) entspricht, um **dadurch** mehrere gefilterte Zugehörigkeitsgrade ($\mu^f_{ij}$) zu erhalten; und
   d) rekursives Schätzen der ersten Variablen (U) auf der Basis der Differenz ($Y_{meas}$-$Y_{cal}$) zwischen den gemessenen und den berechneten Werten der zweiten Variablen (Y) und der gefilterten Zugehörigkeitsgrade ($\mu^f_{ij}$).

2. Verfahren nach Anspruch 1, **dadurch gekennzeichnet, dass**
   die Schritte a) - d) für mehrere Werte des mindestens einen Eingangsparameters ($u_1$, $u_2$) ausgeführt werden, um eine Abbildung herzustellen, die Werte der ersten Variablen (U) in Abhängigkeit von Werten des mindestens einen Eingangsparameters ($u_1$, $u_2$) enthält.

3. Verfahren nach Anspruch 1 oder 2, **dadurch gekennzeichnet, dass**
   der Schritt d) den Schritt des rekursiven Aktualisierens mehrerer Aktivitätswerte $P_{ij}$, die in eine Nachschlagetabelle eingetragen werden, die die erste Variable (U) als Funktion des mindestens einen Eingangsparameters ($u_1$, $u_2$) beschreibt, gemäß der Relation

$$\Delta P_{ij}(k) = \Delta P_{ij}(k-1) + \Delta p_{ij}(k),$$

   mit

$$\Delta p_{ij}(k) = (Y_{meas}(k) - Y_{cal}(k)) * K * \mu^f(k),$$

   umfasst, wobei k den aktuellen Zeitschritt (sample) bezeichnet, K einen vordefinierten Verstärkungsfaktor bezeichnet und $\mu^f = [\mu^f_{ij}]$ eine Matrix ist, die die gefilterten Zugehörigkeitsgrade ($\mu^f_{ij}$) enthält.

4. Verfahren nach einem der Ansprüche 1 bis 3, **dadurch gekennzeichnet, dass**
   jeder aktualisierte Wert ($U_{up}$) der ersten Variablen U gegeben wird durch:

$$U_{up}(k) = U_{est}(k) + U_\Delta(k) = P^T * col(\mu(k)) + \Delta P(k)^T * col(\mu(k)),$$

   wobei $U_{est}$ ein tatsächlicher geschätzter Wert der ersten Variablen (U) ist, P einen Parametervektor bezeichnet, der die Aktivitätswerte $P_{ij}$ enthält, $P^T$ der entsprechende transponierte Parametervektor ist, $\mu = [\mu_{ij}]$ eine Matrix ist, die die Zugehörigkeitsgrade $\mu_{ij}$ enthält, und col($\mu$) eine Transformation der Abbildung $\mu = [\mu_{ij}]$ in einen Spaltenvektor ist.

5. Verfahren nach einem der vorhergehenden Ansprüche, **dadurch gekennzeichnet, dass**
   das Verfahren online während des Betriebs des dynamischen Systems ausgeführt wird.

6. Verfahren nach einem der vorhergehenden Ansprüche, **dadurch gekennzeichnet, dass**

die erste Variable (U) eine Variable ist, die einen Betriebszustands eines Kraftfahrzeugs betrifft, und aus der folgenden Gruppe ausgewählt wird: CO-Emissionsrate, HC-Emissionsrate, eingespritzte Kraftstoffmenge; und/oder die zweite Variable (Y) eine Variable ist, die einen Betriebszustands eines Kraftfahrzeugs betrifft und aus der folgenden Gruppe ausgewählt wird: Katalysatortemperatur, Luft-KraftstoffVerhältnis im Abgas; und/oder die mindestens zwei Eingangsparameter ($u_1$, $u_2$) die Motordrehzahl und die Motorlast eines Kraftfahrzeugs umfassen.

**Revendications**

1. Procédé d'estimation d'au moins une variable en rapport avec l'état de fonctionnement d'un système dynamique, notamment un véhicule à moteur, ladite variable (U) étant une fonction d'au moins un paramètre d'entrée ($u_1$, $u_2$) et étant en corrélation avec une deuxième variable mesurable (Y) par le biais d'un processus dynamique (20) qui se déroule dans ledit système et ladite première variable (U) étant estimée en se basant sur la mesure de ladite deuxième variable (Y),
**caractérisé en ce que**
ledit procédé comprend les étapes suivantes :

   a) Détermination d'une valeur mesurée ($Y_{meas}$) de ladite deuxième variable (Y) ;
   b) Détermination, en se basant sur une valeur estimée ($U_{est}$) de ladite première variable (U), d'une valeur corrélée calculée ($Y_{cal}$) de ladite deuxième variable (Y) en utilisant un modèle de processus (30) qui décrit ladite corrélation entre ladite première variable (U) et ladite deuxième variable (Y) ;
   c) Soumission d'une pluralité de degrés d'appartenance ($\mu_{ij}$), attribués dans un système de type flou à une valeur dudit au moins un paramètre d'entrée ($u_1$, $u_2$) responsable de ladite valeur estimée ($U_{est}$), à un système dynamique (60) qui correspond audit processus dynamique (20), obtenant ainsi une pluralité de degrés d'appartenance ($\mu^f_{ij}$) filtrés ; et
   d) Estimation récursive de ladite première variable (U) en se basant sur la différence ($Y_{meas}$ - $Y_{cal}$) entre lesdites valeurs mesurée et calculée de ladite deuxième variable (Y) et lesdits degrés d'appartenance ($\mu^f_{ij}$) filtrés.

2. Procédé selon la revendication 1, **caractérisé en ce que** lesdites étapes a) - d) sont exécutées pour une pluralité de valeurs dudit au moins un paramètre d'entrée ($u_1$, $u_2$) afin d'établir une carte incluant les valeurs de ladite première variable (U) en fonction des valeurs dudit au moins un paramètre d'entrée ($u_1$, $u_2$).

3. Procédé selon la revendication 1 ou 2, **caractérisé en ce que** ladite étape d) comprend l'étape consistant à mettre à jour de manière récursive une pluralité de valeurs d'activité $P_{ij}$ consignées dans un tableau de référence décrivant ladite première variable (U) en fonction de l'au moins un paramètre d'entrée ($u_1$, $u_2$) conformément à la relation

$$\Delta P_{ij}(k) = \Delta P_{ij}(k-1) + \Delta P_{ij}(k),$$

avec

$$\Delta P_{ij}(k) = (Y_{meas}(k) - Y_{cal}(k)) * K * \mu^f(k),$$

où k désigne le pas de temps courant (échantillon), K désigne un gain prédéfini et $\mu^f = [\mu^f_{ij}]$ désigne une matrice incluant lesdits degrés d'appartenance ($\mu^f_{ij}$) filtrés.

4. Procédé selon l'une quelconque des revendications 1 à 3, **caractérisé en ce que** chaque valeur mise à jour ($U_{pd}$) de ladite première variable U est donnée par :

$$U_{up}(k) = U_{est}(k) + U_\Delta(k) = P^T * col(\mu(k)) + \Delta P(k)^T * col(\mu(k)),$$

où $U_{est}$ désigne une valeur estimée réelle de ladite première variable (U), P désigne un vecteur de paramètre incluant lesdites valeurs d'activité $P_{ij}$, $P^T$ désigne le vecteur de paramètre transposé correspondant, $\mu = [\mu_{ij}]$ désigne une matrice incluant lesdits degrés d'appartenance $\mu_{ij}$ et col $(\mu)$ désigne une transformation de la carte $\mu = [\mu_{ij}]$ en un vecteur de colonne.

**5.** Procédé selon l'une quelconque des revendications précédentes, **caractérisé en ce que** ledit procédé est exécuté en ligne pendant le fonctionnement dudit système dynamique.

**6.** Procédé selon l'une quelconque des revendications précédentes, **caractérisé en ce que** ladite première variable (U) est une variable en rapport avec un état de fonctionnement d'un véhicule à moteur et elle est choisie parmi le groupe composé du taux d'émissions de CO, du taux d'émissions de HC et de la quantité de carburant injectée ; et/ou ladite deuxième variable (Y) est une variable en rapport avec un état de fonctionnement d'un véhicule à moteur et elle est choisie parmi le groupe composé de la température du catalyseur et du rapport air/carburant évacué ; et/ou lesdits au moins deux paramètres d'entrée ($u_1$, $u_2$) comprennent la vitesse du moteur et la charge du moteur d'un véhicule à moteur.

Fig. 1

# Fig. 2

a)

b)

## Fig. 3

a) u₁

Time [s]

b) u₂

Time [s]

## Fig. 4

$Y_{meas}-Y_{cal}$

Time [s]

# Fig. 5

a)

b)